# EUROPÄISCHE PATENTSCHRIFT

(11) **EP 1 904 728 B1**
(45) Veröffentlichungstag und Bekanntmachung des Hinweises auf die Patenterteilung: **05.11.2008**
(21) Anmeldenummer: 06777700.3
(22) Anmeldetag: 11.07.2006
(51) Int. Cl.: F02B 51/02, F02B 77/02, B01J 23/46, B01J 35/02, B01J 35/10

(54) **KATALYSATORSYSTEM FÜR EINEN VERBRENNUNGSMOTOR UND VERFAHREN ZU DESSEN HERSTELLUNG**
CATALYTIC CONVERTER SYSTEM FOR AN INTERNAL COMBUSTION ENGINE AND METHOD FOR PRODUCING SAID SYSTEM
SYSTEME CATALYSEUR POUR MOTEUR A COMBUSTION ET PROCEDE DE PRODUCTION DE CE SYSTEME

(30) Priorität: 11.07.2005 DE 102005033118
(43) Veröffentlichungstag der Anmeldung: 02.04.2008
(73) Patentinhaber: SIEMENS AKTIENGESELLSCHAFT, 80333 München (DE)
(72) Erfinder: JENSEN, Jens Dahl, 14050 Berlin (DE); ARNDT, Frank, 13581 Berlin (DE); KRÜGER, Ursus, 14089 Berlin (DE); RÖNSCH, Hendrik, 10711 Berlin (DE)
(86) Internationale Anmeldenummer: PCT/EP2006/064100
(87) Internationale Veröffentlichungsnummer: WO 2007/006784

(56) Entgegenhaltungen:
- FR-A- 2 615 247
- US-A1- 2004 087 441
- US-B1- 6 240 912
- PATENT ABSTRACTS OF JAPAN Bd. 008, Nr. 143 (M-306), 4. Juli 1984 (1984-07-04) & JP 59 041624 A (MITSUBISHI JUKOGYO KK), 7. März 1984 (1984-03-07)
- PATENT ABSTRACTS OF JAPAN Bd. 008, Nr. 201 (M-325), 14. September 1984 (1984-09-14) & JP 59 090714 A (SHIGEO HAGINO; others: 01), 25. Mai 1984 (1984-05-25)
- PATENT ABSTRACTS OF JAPAN Bd. 007, Nr. 265 (M-258), 25. November 1983 (1983-11-25) & JP 58 144624 A (TOYO KOGYO KK), 29. August 1983 (1983-08-29)
- PATENT ABSTRACTS OF JAPAN Bd. 017, Nr. 423 (M-1458), 6. August 1993 (1993-08-06) & JP 05 086863 A (ADVANCE KOOJIENEREESHIYON SYST GIJUTSU KENKYU KUMIAI), 6. April 1993 (1993-04-06)
- PATENT ABSTRACTS OF JAPAN Bd. 2003, Nr. 12, 5. Dezember 2003 (2003-12-05) & JP 2004 195339 A (MATSUSHITA ELECTRIC IND CO LTD), 15. Juli 2004 (2004-07-15)
- PATENT ABSTRACTS OF JAPAN Bd. 1998, Nr. 14, 31. Dezember 1998 (1998-12-31) & JP 10 249201 A (TOYOTA MOTOR CORP), 22. September 1998 (1998-09-22)
- PATENT ABSTRACTS OF JAPAN Bd. 2002, Nr. 09, 4. September 2002 (2002-09-04) & JP 2002 138816 A (NISSAN DIESEL MOTOR CO LTD), 17. Mai 2002 (2002-05-17)

## Beschreibung

Die Erfindung betrifft ein Katalysatorsystem für einen Verbrennungsmotor sowie ein Verfahren zur Herstellung eines solchen Katalysatorsystems.

Bei modernen Verbrennungsmotoren, insbesondere im Automobilbereich, wird inzwischen dem Problem der Entfernung von unerwünschten Komponenten aus dem Verbrennungsgas große Aufmerksamkeit geschenkt. Hierbei werden üblicherweise Katalysatoren eingesetzt, die auf der Abgasseite des Motors angeordnet sind. Jedoch sind diese Katalysatoren meist nur bei verminderten Temperaturen aktiv, so dass beim Start des Motors die Effizienz meist gering ist. Außerdem neigen Katalysatoren, die abgasseitig angeordnet sind, zu erhöhter Korrosion, und die Leistung vermindert sich durch Ablagerung von chemischen Komponenten oder schlicht durch mechanische Abnutzung.

Aus dem Abstract der JP 11-223 122 A ist es z. B. bekannt, den Katalysator direkt in den angrenzenden Auslasstrackt des Zylinders für Verbrennungsgase einzubringen. Alternativ kann auch eine Katalysatorbeschichtung vorgesehen werden, die auf dem Kolben oder den Zylinderinnenwänden aufgebracht ist, so dass diese Beschichtung im durch den Zylinder und den Kolben gebildeten Verbrennungsraum aktiv wird.

Gemäß der DE 199 45 742 C1 ist ein Katalysator für eine Verbrennungskraftmaschine offenbart, welcher einen Metallfaser-Katalysatorkörper aufweist. Dieser kann auf dem Kolben fixiert werden, d. h. dass der Katalysator im Verbrennungsraum mit den Verbrennungsgasen in Berührung kommt. Hierdurch ist bereits bei der Verbrennung eine katalytische Beeinflussung des Verbrennungsprozesses möglich.

Auch gemäß der EP 0 695 859 A1 kann Katalysatormaterial im Bereich zwischen Kolben und Zylinder derart angebracht sein, dass dieser während des Verbrennungsprozesses im Brennraum der Brennkraftmaschine zum Einsatz kommt.

Es ist daher die Aufgabe, ein Katalysatorsystem für einen Verbrennungsmotor zu schaffen, der eine vergleichsweise gute Effizienz bei jeder Betriebssituation des Motors verbunden mit einer langen Leistungsdauer aufweist.

Diese Aufgabe wird durch ein Katalysatorsystem mit den Merkmalen des Anspruchs 1 gelöst. Demgemäß wird ein Katalysatorsystem für einen Verbrennungsmotor mit mindestens einem Zylinder und/oder Kolben bereitgestellt, welches dadurch gekennzeichnet ist, dass der Katalysator in Form von Nanopartikeln auf dem Zylinder und/oder Kolben angeordnet ist.

Unter Nanopartikel im Sinne der vorliegenden Erfindung werden insbesondere Partikel verstanden, die eine oder mehr der folgenden Eigenschaften aufweisen:
- eine Form mit Durchmessern zwischen mindestens5 und höchstens 500 nm
- eine katalytisch aktive Oberfläche
- eine Materialzusammensetzung, die aus Metall, Keramik Glas, Kunststoff oder aus Mischungen der genannten Materialien besteht, wie z. B. Metall- Keramik oder Polymer-Keramik
- funktionalisierte Oberflächen
- Ein "Core-Shell" (d.h. ein Kern mit einer Hülle) oder ein Multi-Schicht-Aufbau.

Durch die Anordnung der Nanopartikel auf dem Zylinder und/oder Kolben ergeben sich u. a. mindestens einer der folgenden Vorteile:
- Die Effizienz des Verbrennungsmotors wird dadurch gesteigert, dass der Katalysator im Verbrennungsraum angeordnet ist und somit auch beim Anfahren des Motors bei optimaler Temperatur arbeiten kann.
- Durch die Anordnung auf dem Zylinder kann eine effizientere und saubere Katalyse erreicht werden; dadurch sind insbesondere auch längere Laufzeiten des Katalysators erzielbar.
- Dadurch, dass der Katalysator in Form von Nanopartikeln bereitgestellt wird, ist eine höhere Katalyserate pro Gewicht an eingesetztem Katalysator verglichen mit Katalysatoren nach dem Stand der Technik erreichbar.
- Dadurch, dass abgasseitig kein extra Katalysatorraum bereitgestellt werden muss, kann eine kompaktere Bauweise erreicht werden, was z. B. einen Einsatz des Katalysatorsystems auch bei Motorsägen oder kleineren Fahrzeugen wie Mopeds oder Mofas erlaubt.

Gemäß einer bevorzugten Ausführungsform der Erfindung sind die Nanopartikel in Nanopartikelröhren, welche eine Form etwa von länglichen Röhren besitzen, vorgesehen und/oder angeordnet. Diese Anordnung hat sich als besonders effizient erwiesen, da so eine besonders gute Katalyseeffizienz erreichbar ist. Bevorzugt sind die Nanopartikel in Aluminiumoxid-Poren vorgesehen und/oder angeordnet bzw. die Nanopartikelrören sind in Form von Aluminiumoxid-Poren ausgebildet.

Gemäß einer bevorzugten Ausführungsform der Erfindung beträgt der mittlere Durchmesser der Nanopartikelröhren mindestens5 nm und höchstens 100 nm. Dadurch kann die Katalyseeffizienz nochmals erhöht werden. Bevorzugt beträgt der mittlere Durchmesser der Nanopartikelröhren mindestens 10 nm und höchstens 50 nm, noch bevorzugt mindestens 12 nm und höchstens 40 nm, sowie am meisten bevorzugt mindestens 15 nm und höchstens 20 nm.

Gemäß einer bevorzugten Ausführungsform der Erfindung beträgt die mittlere Länge der Nanopartikelröhren mindestens 5µm und höchstens 50 µm. Durch eine solche Länge der Nanopartikelröhren wird die Absorption an die Nanopartikel erhöht und es kommt zu einer besseren Katalyse. Bevorzugt beträgt die mittlere Länge der Nanopartikelröhren mindestens 10 µm und höchstens 30 µm, noch bevorzugt mindestens 25 µm und höchstens 25 µm.

Gemäß einer bevorzugten Ausführungsform der Erfindung beträgt das Verhältnis von Durchmesser zur mittleren Länge der Nanopartikelröhren mindestens 1:300 und höchstens 1:1500. Dies hat sich in der Praxis als besonders vorteilhaft herausgestellt. Bevorzugt beträgt das Verhältnis von Durchmesser zur mittlere Länge der Nanopartikelröhren mindestens 1:500 und höchstens 1:1200, noch bevorzugt mindestens 1:800 und höchstens 1:1000.

Gemäß einer bevorzugten Ausführungsform der Erfindung beträgt der mittlere Abstand zwischen zwei benachbarten Nanopartikelröhren eines Clusters mindestens 15 nm und höchstens 20 nm. So wird eine gute Katalyseeffizienz bei gleichzeitiger Stabilität der Nanopartikel erreicht.

Gemäß einer bevorzugten Ausführungsform der Erfindung sind die Nanopartikel im wesentlichen aus einem Material ausgewählt aus der Gruppe umfassend Pt, Pd, Rh, Ir, Co, Ni, Cu Ag, Au, Ru, Ir, Os, Re und Mischungen daraus. Diese Materialien haben sich in der Praxis als die besten Materialien für die vorliegende Erfindung erwiesen.

Gemäß einer bevorzugten Ausführungsform der Erfindung sind die Nanopartikel im Wesentlichen über den gesamten Temperaturbereich von mindestens 600 °C und höchstens 800 °C temperaturstabil.

Dadurch wird ein langer Einsatz in Verbrennungsmotoren erreicht. "Im wesentlichen" im Sinne der vorliegenden Erfindung bedeutet mindestens 50%, bevorzugt mindestens 70% sowie am meisten bevorzugt mindestens 90%. Bevorzugt sind die Nanopartikel im Wesentlichen über den gesamten Temperaturbereich von mindestens 400 °C und höchstens 900 °C, bevorzugt von mindestens 200 °C und höchstens 1000 °C temperaturstabil.

Unter "temperaturstabil" im Sinne der vorliegenden Erfindung wird insbesondere verstanden, dass die genannten Materialien über den Temperaturbereich mechanisch stabil bleiben und/oder sich die Festigkeit über den Temperaturbereich nicht wesentlich ändert.

Gemäß einer bevorzugten Ausführungsform der Erfindung beträgt das Oberfläche/Volumenverhältnis der Nanopartikel (auf einer Nanometer-Skala) von mindestens 1:1 und höchstens 1:5. Dadurch wird eine nochmals erhöhte Katalyseeffizienz erreicht. Bevorzugt beträgt das Oberfläche/Volumenverhältnis der Nanopartikel mindestens 1:1,5 bis höchstens 1:4, noch bevorzugter mindestens 1:2 bis höchstens 1:35, sowie am meisten bevorzugt mindestens 1:25 bis höchstens 1:3.

Gemäß einer bevorzugten Ausführungsform der Erfindung sind die Nanopartikel an die Oberflächenstruktur des Zylinders und/oder Kolbens angepasst.

Unter "angepasst" im Sinne der vorliegenden Erfindung wird insbesondere verstanden, dass die Nanopartikel eine Form und Größe besitzen, die in die Aluminumoxid-Poren gemäß der im folgenden beschriebenen bevorzugten Ausführungsform der Erfindung einlagerbar sind und/oder sich darin einlagern.

Die Erfindung bezieht sich außerdem auf ein Verfahren zur Herstellung eines Katalysatorsystems, welches wie oben beschriebene Nanopartikel enthält und wobei der Zylinder im Wesentlichen aus Aluminium besteht. Das Verfahren ist dadurch gekennzeichnet, dass die Nanopartikel während des Eloxierens des Aluminiums zugegeben werden und sich in die Oberflächenstruktur des Zylinders einlagern.

Für den Fall, dass der Zylinder im Wesentlichen aus Aluminium besteht, hat sich als vorteilhaft herausgestellt, die Nanopartikel während des Eloxieren des Aluminiums zuzugeben. Beim Eloxiervorgang wird die Oberfläche des Aluminiums zu Aluminiumoxid oxidiert, wodurch sich eine nicht unwesentliche Vergrößerung des Volumens, etwa im Bereich von 20% ergibt. Die damit einhergehende Veränderung der Struktur bewirkt eine Einlagerung der Nanopartikel.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können. Weitere Einzelheiten, Merkmale und Vorteile des Gegenstandes der Erfindung ergeben sich aus den Unteransprüchen sowie aus der nachfolgenden Beschreibung der zugehörigen Zeichnung, in der - beispielhaft - ein Ausführungsbeispiel des erfindungsgemäßen Katalysatorsystems dargestellt sind. In der einzigen Zeichnung zeigt:

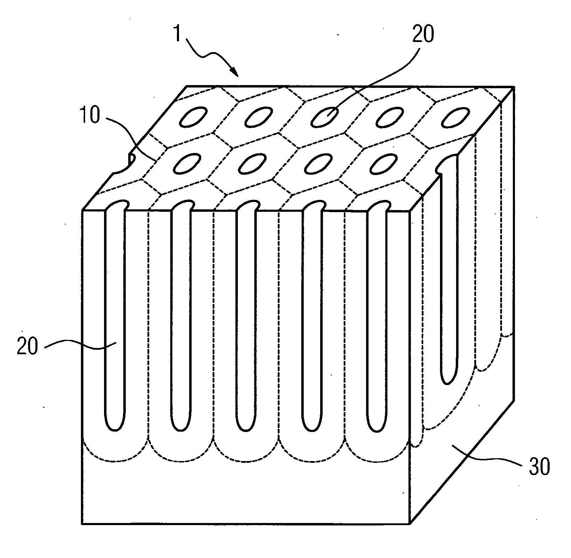

- Figur 1: eine schematische, perspektivische Darstellung mit teilweiser Schnittansicht eines Ausschnitts der O- berfläche eines - sehr stark idealisierten - Kata- lysatorsystems gemäß einer ersten Ausführungsform der Erfindung

Figur 1 zeigt eine schematische, perspektivische Darstellung mit teilweiser Schnittansicht eines Ausschnitts der Oberfläche eines - sehr stark idealisierten - Katalysatorsystems 1 gemäß einer ersten Ausführungsform der Erfindung. In diesem Katalysatorsystem ist die Oberfläche eines Aluminiumzylinders 30 durch Eloxieren oxidiert worden, sodass sich hexagonale Zellen 10 aus Aluminiumoxid bilden. Es sei angemerkt, dass die regelmäßige Anordnung gemäß der Figur eine sehr stark i-dealisierte Darstellung ist; in der Realität werden sich die Durchmesser, die Dicke sowie die Anordnung der einzelnen Zellen 10 voneinander abweichen und eine statistische Verteilung bilden.

Wie in der Figur zu sehen ist, bilden sich innerhalb der einzelnen Zellen verschiedene Poren, die längliche Röhren (= die wie oben beschriebenen Nanopartikelröhren 20) bilden. Vor dem Eloxieren wurden nun Nanopartikel gemäß der vorliegenden Erfindung zugegeben, die sich (im Bild nicht gezeigt) in statistischer Weise innerhalb dieser Nanopartikelröhren anordnen und für den gewünschten erfindungsgemäßen Effekt sorgen. Besonders vorteilhaft ist es dabei, wenn die Nanopartikelröhren die oben beschriebenen Merkmale hinsichtlich Länge, Durchmesser sowie des Verhältnisses zwischen Durchmesser und Länge aufweisen.

## Patentansprüche

1. Katalysatorsystem für einen Verbrennungsmotor mit mindestens einem einen Verbrennungsraum bildenden Zylinder (30) und/oder Kolben, wobei
- der Katalysator in Form von Nanopartikeln in dem Zylinder (30) und/oder auf dem Kolben angeordnet ist und
- die Nanopartikel in die Oberflächenstruktur des Zylinders und/oder des Kolbens bildende Nanopartikelröhren (20), welche eine Form etwa von länglichen Röhren besitzen, angeordnet sind.

2. Katalysatorsystem nach Anspruch 1, **dadurch gekennzeichnet, dass** der mittlere Durchmesser der Nanopartikelröhren (20) mindestens 5 nm und höchstens 100 nm beträgt.

3. Katalysatorsystem nach einem der Ansprüche 1 bis 2, **dadurch gekennzeichnet, dass** die mittlere Länge der Nanopartikelröhren (20) mindestens 5 µm und höchstens 50 µm beträgt.

4. Katalysatorsystem nach einem der Ansprüche 1 bis 3, **dadurch gekennzeichnet, dass** der mittlere Abstand zwischen zwei benachbarten Nanopartikelröhren (20) mindestens 15 nm und höchstens 20 nm beträgt.

5. Katalysatorsystem nach einem der Ansprüche 1 bis 4, **dadurch gekennzeichnet, dass** die Nanopartikel im wesentlichen aus einem Material ausgewählt aus der Gruppe umfassend Pt, Pd, Rh, Ir, Co, Ni, Cu Ag, Au, Ru, Ir, Os, Re und Mischungen daraus bestehen.

6. Katalysatorsystem nach einem der Ansprüche 1 bis 5, **dadurch gekennzeichnet, dass** die Nanopartikel im Bereich von mindestens 600 °C bis höchstens 800 °C temperaturstabil sind.

7. Katalysatorsystem nach einem der Ansprüche 1 bis 6, **dadurch gekennzeichnet, dass** das Oberfläche/Volumenverhältnis (auf einer Nanometer-Skala) der Nanopartikel mindestens 1:1 und höchstens 1:5 beträgt.

8. Katalysatorsystem nach einem der Ansprüche 1 bis 7, **dadurch gekennzeichnet, dass** die Nanopartikel an die Oberflächenstruktur des Zylinders und/oder Kolbens angepasst sind.

9. Verfahren zum Herstellen eines Katalysatorsystems nach einem der Ansprüche 1 bis 9, wobei der Zylinder im Wesentlichen aus Aluminium besteht, **dadurch gekennzeichnet, dass** die Nanopartikel während des Eloxierens des Aluminiums zugegeben werden und sich in die Oberflächenstruktur des Zylinders einlagern.

## Claims

1. Catalyst system for an internal combustion engine with at least one cylinder (30) and/or piston forming a combustion space,
- the catalyst being arranged in the form of nanoparticles in the cylinder (30) and/or on the piston, and
- the nanoparticles being arranged in nanoparticle tubes (20) which form the surface structure of the cylinder and/or of the piston and which are in the approximate form of elongate tubes.

2. Catalyst system according to Claim 1, **characterized in that** the mean diameter of the nanoparticle tubes (20) amounts to at least 5 nm and at most 100 nm.

3. Catalyst system according to one of Claims 1 to 2, **characterized in that** the mean length of the nanoparticle tubes (20) amounts to at least 5 µm and at most 50 µm.

4. Catalyst system according to one of Claims 1 to 3, **characterized in that** the mean distance between two adjacent nanoparticle tubes (20) amounts to at least 15 nm and at most 20 nm.

5. Catalyst system according to one of Claims 1 to 4, **characterized in that** the nanoparticles consist essentially of a material selected from the group comprising Pt, Pd, Rh, Ir, Co, Ni, Cu, Ag, Au, Ru, Ir, Os, Re and mixtures thereof.

6. Catalyst system according to one of Claims 1 to 5, **characterized in that** the nanoparticles are thermally stable in the range of at least 600°C to at most 800°C.

7. Catalyst system according to one of Claims 1 to 6, **characterized in that** the surface/volume ratio (on a nanometer scale) of the nanoparticles amounts to at least 1:1 and at most 1:5.

8. Catalyst system according to one of Claims 1 to 7, **characterized in that** the nanoparticles are adapted to the surface structure of the cylinder and/or piston.

9. Method for producing a catalyst system according to one of Claims 1 to 9, the cylinder consisting essentially of aluminum, **characterized in that** the nanoparticles are added during the anodizing of the aluminum and deposit themselves into the surface structure of the cylinder.

## Revendications

1. Système catalytique pour un moteur à combustion interne ayant au moins un cylindre ( 30 ) et/ou un piston formant une chambre de combustion, dans lequel
- le catalyseur est disposé sous la forme de nanoparticules dans le cylindre ( 30 ) et/ou sur le piston et
- des nanoparticules sont disposées dans des tubes ( 20 ) de nanoparticules formant la structure de surface du cylindre et/ou du piston et ayant à peu près la forme de tubes oblongs.

2. Système catalytique suivant la revendication 1, **caractérisé en ce que** le diamètre moyen des tubes ( 20 ) de nanoparticules est d'au moins 5 nm et d'au plus 100 nm.

3. Système catalytique suivant l'une des revendications 1 à 2, **caractérisé en ce que** la longueur moyenne des tubes ( 20 ) de nanoparticules est d' au moins 5 µm et d'au plus 50 µm.

4. Système catalytique suivant l'une des revendications 1 à 3, **caractérisé en ce que** la distance moyenne entre deux tubes ( 20 ) de nanoparticules voisins est d' au moins 15 nm et d' au plus 20 nm.

5. Système catalytique suivant l'une des revendications 1 à 4, **caractérisé en ce que** les nanoparticules sont choisies essentiellement dans un matériau du groupe comprenant Pt, Pd, Rh, Ir, Co, Ni, Cu, Ag, Au, Ru, Ir, Os, Re et leurs mélanges.

6. Système catalytique suivant l'une des revendications 1 à 5, **caractérisé en ce que** les nanoparticules sont stables à la température dans la plage allant d'au moins 600°C à au plus 800°C.

7. Système catalytique suivant l'une des revendications 1 à 6, **caractérisé en ce que** le rapport surface/volume ( à l'échelle du nanomètre ) des nanoparticules est au moins de 1:1 et au plus de 1:5.

8. Système catalytique suivant l'une des revendications 1 à 7, **caractérisé en ce que** les nanoparticules sont adaptées à la structure de surface du cylindre et/ou du piston.

9. Procédé de production d' un système catalytique suivant l'une des revendications 1 à 9, dans lequel le cylindre est essentiellement en aluminium, **caractérisé en ce que** l'on ajoute les nanoparticules pendant l'anodisation de l'aluminium et on les incorpore dans la structure de surface du cylindre.
